# EUROPÄISCHE PATENTSCHRIFT

(11) **EP 0 727 666 B1**
(45) Veröffentlichungstag und Bekanntmachung des Hinweises auf die Patenterteilung: **13.05.1998**
(21) Anmeldenummer: 96101544.3
(22) Anmeldetag: 03.02.1996
(51) Int. Cl.: G01P 3/48, G01P 21/02, G01D 21/02

(54) **Einrichtung zum Überwachen von mindestens zwei Zustandsgrössen eines Kraftfahrzeuges**
Device for monitoring at least two variables of a motor vehicle
Dispositif pour la surveillance d'au moins deux variables d'un véhicule automobile

(30) Priorität: 14.02.1995 DE 19504822
(43) Veröffentlichungstag der Anmeldung: 21.08.1996
(73) Patentinhaber: RICHARD HIRSCHMANN GESELLSCHAFT m.b.H., 6830 Rankweil-Brederis (AT)
(72) Erfinder: Federer, Arnold, A-6840 Götzis (AT); Waibel, Thomas, Dr., A-6840 Götzis (AT)
(74) Vertreter: Hefel, Herbert, Dipl.-Ing.

(56) Entgegenhaltungen:
- EP-A- 0 593 933
- DE-A- 2 606 012
- DE-A- 3 007 747

## Beschreibung

Die Erfindung bezieht sich auf eine Einrichtung zum Überwachen von mindestens zwei Zustandsgrößen eines Kraftfahrzeuges.

Einrichtungen dieser Art sind vielfach bekanntgeworden. Es ist in der DE-OS 2606 012 eine Sensoranordnung für eine Blockierschutzeinrichtung für Kraftfahrzeugbremsen beschrieben mit einem elektrischen Stromkreis für einen Sensor mit einem einem Impulsrad gegenüber liegenden Impulsgeber, der über diesen Stromkreis mit einem elektronischen Schaltgerät verbunden ist, und mit einer Überwachungseinrichtung für die ordnungsgemäße Arbeit der Blockierschutzeinrichtung, wobei der Impulsgeber Verbindung hat mit einer Bremsbelagverschleiß-Anzeigeeinrichtung. Als Impulsgeber ist eine Induktionsspule vorgesehen. Die Bremsbeläge sind mit Kontaktstiften ausgestattet. Wird bei den Bremsbelägen der Scheibenbremse die Belagverschleißgrenze erreicht, so stellt der jeweilige Kontaktstift mit der an Masse liegenden Bremsscheibe eine Kurzschlußverbindung her. Dadurch wird die Spule des Impulsgebers ganz oder bei Verwendung eines Widerstandes teilweise kurzgeschlossen mit der Folge, daß das entsprechende Geschwindigkeitssignal des Impulsgebers ausfällt oder auf der entsprechenden Signalleitung die Spannung abfällt. Diese vorbekannte Einrichtung ist nicht zweckmäßig, denn durch den Einsatz eines passiven Sensors (Induktionsspule) kann diese Einrichtung bei kleinen Drehzahlen die ihr zugedachte Funktion nicht mehr ausüben, wenn die Bremsbeläge abgenutzt und verschlissen sind. Wird die Drehzahl gering, wird in der Induktionsspule nur mehr eine sehr kleine Spannung induziert, die beim Ansprechen des Kontaktstiftes im Bremsbelag noch weiter verringert wird, so daß die Anzeigeeinrichtung oder Auswerteinrichtung unzureichend versorgt wird. Das dürfte auch der Grund dafür sein, daß diese Einrichtung bislang keinen Eingang in die Praxis gefunden hat. Ist ein Sensorsignal, wie im vorliegenden Fall, hinsichtlich seiner Größe von der Drehzahl abhängig, so ist keine ausreichende Sicherheit für die Funktion der Blockierschutzeinrichtung gewährleistet.

Eine andere bekanntgewordene Sicherheitsvorrichtung für Kraftfahrzeugbremsen, insbesondere Scheibenbremsen, zeigt und beschreibt das DE-GM 8804 239. Bei dieser Einrichtung mit Antiblockiersystem, bei welchem ein Drehzahlsensor mit Markierungen an der Fahrzeugbremse zusammenwirkt, sind am Bremssattel sowohl der Drehzahlsensor des Antiblockiersystems als auch ein Bremsverschleißsensor angeordnet, die beide Daten an eine gemeinsame Auswertelektronik liefern sollen. Die beiden Sensoren sind parallel zueinander geschaltet, und die Vorrichtung zielt darauf ab, elektronische Bausteine und Kabel sowie Montageteile und Montagekosten einzusparen. In der Auswertelektronik sollen die Signale verknüpft werden können. Die hier beschriebenen und gezeigten Maßnahmen beschränken sich im wesentlichen auf die Erläuterung mechanischer Teile ohne Angaben darüber, wie diese Einrichtung - elektrisch gesehen - arbeiten soll.

Auch die DE-OS 3809 886 ist in diesem Zusammenhang zu erwähnen. Ein Sensor für Kraftfahrzeuge mit elektronischer Regelung des Fahr- und Bremsverhaltens und/oder der Schwingungsdämpfung in Abhängigkeit von der Radgeschwindigkeit und der Vertikalbeschleunigung ist durch Kombination und bauliche Vereinigung eines induktiven oder magnetoresistiven Meßwertaufnehmers mit einem Vertikalbeschleunigungs-Sensorsystem und gegebenenfalls mit weiteren Sensoren zu einem Doppel- oder Mehrfachfunktionssensor ausgestaltet. Über eine gemeinsame Signalleitung werden die Meßsignale aus dem Sensor herausgeführt. Im Gehäuse, das mehrere Sensoren umfaßt, ist auch noch eine elektronische Schaltung untergebracht, die zur Aufbereitung, Verstärkung und Verarbeitung der Signale des Beschleunigungssensors dient. Die Meßsignale werden über ein gemeinsames Koaxialkabel oder über eine mehradrige Leitung aus dem Sensor herausgeführt und einer gemeinsamen Auswertelektronik zugeleitet. In welcher Weise diese Sensoren elektrisch zusammenarbeiten, ist jedoch dieser Druckschrift nicht zu entnehmen, auch nicht die Art und Weise der Übertragung der Meßsignale.

Die DE-OS 4322 440 zeigt und beschreibt eine Einrichtung zur ABS-integrierten Bremsbelagverschleißanzeige bei einem Kraftfahrzeug, bei der einem zentralen ABS- bzw. ABS/ASR-Mikrorechner von randnahen Sensoren sowohl Raddrehzahlsignale als auch Bremsbelagverschleißsignale zuführbar sind und die Mittel zur Anzeige von Fehlerzuständen und/oder Bremsbelagverschleiß umfaßt, wobei die Raddrehzahlsignale und die Bremsbelagverschleißsignale zu dem zentralen ABS- bzw. ABS/ASR-Mikrorechner übertragenden Leitungen zumindest radweise zusammengefaßt bzw. einsträngig verlegt und steckverbunden sind. Die radweise zusammengefaßten, einsträngig verlegten Leitungen sind an einen einzigen Anschlußsteckverbinder zu dem den ABS- bzw. ABS/ASR-Mikrorechner enthaltenden Bremssteuergerät geführt. Mittel zur Anzeige von Fehlerzuständen und/oder Verschleiß bezüglich ihrer Ansteuerung sind einem Kombiinstrument im Armaturenbrett des Fahrzeuges zugeordnet. Das Kombiinstrument mit dem ABS- bzw. ABS/ASR-Steuergerät steht über einen einzigen Signalpfad in Verbindung, der über einen einzigen Anschlußsteckverbinder führt. Die Zustands- und/oder Warnsignale vom ABS- bzw. ABS/ASR-Steuergerät sind entweder per Pulsweitenmodulation oder per Protokoll an das Kombiinstrument übertragbar. Das Kombiinstrument umfaßt einen eigenen Mikrorechner, der die Pulsweiten- bzw. Protokoll demodulation und Ansteuerung entsprechender Anzeigen leistet. Über die Erzeugung und Verarbeitung der Signale finden sich in dieser Druckschrift jedoch keine detaillierten Angaben. Primär handelt es sich bei dieser vorbekannten Maßnahme darum, alle Leitungswege unter Vermeidung von Stromschleifen und Induktionsflächen auszubilden, indem alle Raddrehzahl- und Belagverschleißsignalleitungen jeweils einsträngig bzw. zusammengefaßt über gemeinsame Fixierungen, Tülle, Zwischenverbindungsstecker und einen Anschlußverbindungsstecker zu dem Steuergerät geführt werden.

Der Vollständigkeit halber ist auch die DE-OS 4308 031 zu benennen. Diese zeigt und beschreibt eine Vorrichtung zum Erfassen der Bewegung eines bewegbaren Teiles, bei der die von zwei Lagesensoren abgegebenen Signale zu einem Signal addiert werden, das über eine Signalleitung zu einer Auswertanordnung geführt ist. Die den Lagesensoren zugeordneten Lagebereiche weisen ein Überlappungsgebiet auf. Eine signalverarbeitende Anordnung ermittelt aus den Lagesignalen ein Richtungs- und ein Geschwindigkeitssignal. Mit dem Richtungs- und dem Geschwindigkeitssignal werden zwei Stromquellen angesteuert, die auf der Signalleitung festgelegte Ströme einprägen. Die Ströme addieren sich auf der Signalleitung. In einer ersten Ausgestaltung weist ein über die Signalleitung übertragenes Signal vier unterschiedliche Pegel auf. In einer anderen Ausgestaltung weist das über die Signalleitung übertragene Signal drei unterschiedliche Pegel auf. Diese Vorrichtung ist geeignet zur Verwendung in einem Stellantrieb, der in einem Kraftfahrzeug angeordnet ist. Insbesondere ist hier an einen elektromotorischen Antrieb zum Öffnen und Schließen von Fenstern eines Kraftfahrzeuges gedacht.

Schlußendlich ist noch die DE-OS 3007 747 anzuführen, die einen Sensor für eine physikalische Größe beschreibt. Die Sensorausgangsgröße wird durch eine zweite physikalische Größe beeinflußt. Zur zusätzlichen Erfassung der zweiten physikalischen Größe ist eine zusätzliche elektronische Auswertschaltung für einen Sensorparameter vorgesehen, der sich in Abhängigkeit der zweiten physikalischen Größe ändert. Diese zweite physikalische Größe ist die Temperatur. Im speziellen wird hier ein integrierter Schaltkreis für einen Hallsensor beschrieben. Die Versorgungsspannung wird dem Hallelement über einen Widerstand und eine Verstärkerstufe zugeleitet, und es ist auch ein Ausgangsleistungstransistor vorgesehen, der ebenfalls über einen Widerstand an der Versorgungsspannung liegt. Die jeweils zweiten Anschlüsse bzw. der Emitter des Transistors liegt dabei an Masse. Die im Hallelement infolge des durchfließenden Stromes erzeugte Spannung wird über den Verstärker der Basis des Transistors zugeführt. Der Kollektor des Transistors ist mit der Ausgangsklemme verbunden.

Ausgehend von diesem Stand der Technik zielt die Erfindung darauf ab, eine Einrichtung der eingangs erwähnten Art so zu gestalten, daß trotz der Verwendung von elektronischen Bauteilen, die bekanntermaßen hinsichtlich ihrer Nennwerte erhebliche Streuungen aufweisen, die Einrichtung zuverlässig arbeitet, wobei dem drehzahlabhängigen Signal dabei gegenüber den anderen Signalen aus sicherheitstechnischen Gründen der Vorrang einzuräumen ist, und dieses bevorzugte Signal soll auch dann vorhanden und auswertbar sein, wenn die Binärsensoren ausfallen, sei es durch einen Kurzschluß oder durch eine Fehlfunktion. Darüberhinaus sollen die vom Binärsensor abgegebenen Signale auch dann auswertbar sein, wenn der Motor oder das Fahrzeug stillsteht, der Drehzahlsensor also kein Signal liefern kann. Darüberhinaus wird danach gestrebt, daß stets gleiche Impulsfolgen auf der Signalleitung anfallen, die in der Auswertelektronik sicher und zuverlässig verarbeitet und verwertet werden können. Auch bei stillstehendem Motor bzw. bei stillstehendem Fahrzeug soll die Bremse bzw. der Bremsbelag prüfbar sein. Des weiteren wird danach getrachtet, daß trotz einheitlicher Versorgungsspannung hinreichend unterschiedliche Amplituden für die Signalfrequenzen erzielbar sind, die ja von der Auswertelektronik zu selektieren und zu detektieren sind. Und selbst wenn das binäre Schaltglied, aus welchen Gründen immer, ausfallen sollte, soll dadurch die Erzeugung und Übertragung der vom Hallsensor kommenden Impulsfolge als wesentliches Signal nicht beeinträchtigt werden. Zur Lösung dieser äußerst komplexen und vielgestaltigen Aufgabe schlägt die Erfindung jene Maßnahmen vor, die Inhalt und Gegenstand des Patentanspruches 1 sind. Zweckmäßige Ausgestaltungen der Erfindung werden in den Unteransprüchen festgehalten.

Um die Erfindung zu veranschaulichen, wird sie nachstehend anhand eines Prinzipschaltbildes zur Überwachung der Drehzahl (ABS - Antiblockiersystem) und des Bremsbelagverschleißes (BBV - Bremsbelagverschleiß) näher erörtert, ohne dadurch die Einrichtung auf eben diesen Anwendungsfall zu beschränken. Es zeigen:
Fig. 1 ein Prinzipschaltbild;
Fig. 2 ein schematisches Diagramm mit unterschiedlichen Signalverläufen.

Von einer Auswertelektronik 1, die im Motor- oder Fahrgastraum eines Kraftfahrzeuges untergebracht sein kann und in der die empfangenen Signale selektiert, detektiert, verknüpft und ausgewertet werden, führt eine einadrige Leitung 2 zu einem Anschlußpunkt 3, der hier im Bereich des Bremssattels eines Rades eines Kraftfahrzeuges liegt. Von diesem Anschlußpunkt führt ein Zweig 4 über einen Widerstand 5 zu einem anderseitig an Masse angeschlossenen Transistor 6, an dessen Basis ein Hallsensor 7 und ein damit in Reihe liegender Schmitt-Trigger 8 angeschlossen ist. Dem als Drehzahlfühler dienenden Hallsensor 7 liegt ein mit der Nabe des Fahrzeugrades verbundenes Impulsrad 9 gegenüber. Der Schmitt-Trigger 8 wird über einen Leitungszweig 10 mit Spannung versorgt, der an der Leitung 2 bzw. dem Zweig 4 angeschlossen ist. Ein weiterer Zweig 11, ebenfalls von der Leitung 2 bzw. dem Anschlußpunkt 3 ausgehend, führt über einen Widerstand 12 zu einem zweiten, anderseitig an Masse angeschlossenen Transistor 13, an dessen Basis ein weiterer Schmitt-Trigger 14 in Reihe mit einem Frequenzgenerator 15 und einem binären Schaltglied 16 liegt. Zur Spannungsversorgung von Schmitt-Trigger 14 und Frequenzgenerator 15 ist ein Leitungszweig 17 vorgesehen, der an der Leitung 2 bzw. dem Zweig 11 angeschlossen ist und in dem ein Widerstand 18, in Fließrichtung des Versorgungsstromes gesehen, vor den Bauteilen 14 und 15 liegt.

Das binäre Schaltglied 16 ist hier als Kontaktstift ausgebildet, der im Bremsbelag einer nicht weiter dargestellten Scheibenbremse eines Kraftfahrzeuges liegt. Solche Kontaktstifte sind bekannt.

Von der Auswertelektronik 1 über die Leitung 2 und die angeschlossenen Zweige werden die hier beschriebenen Sensoren mit Gleichspannung, beispielsweise 12 Volt, versorgt.

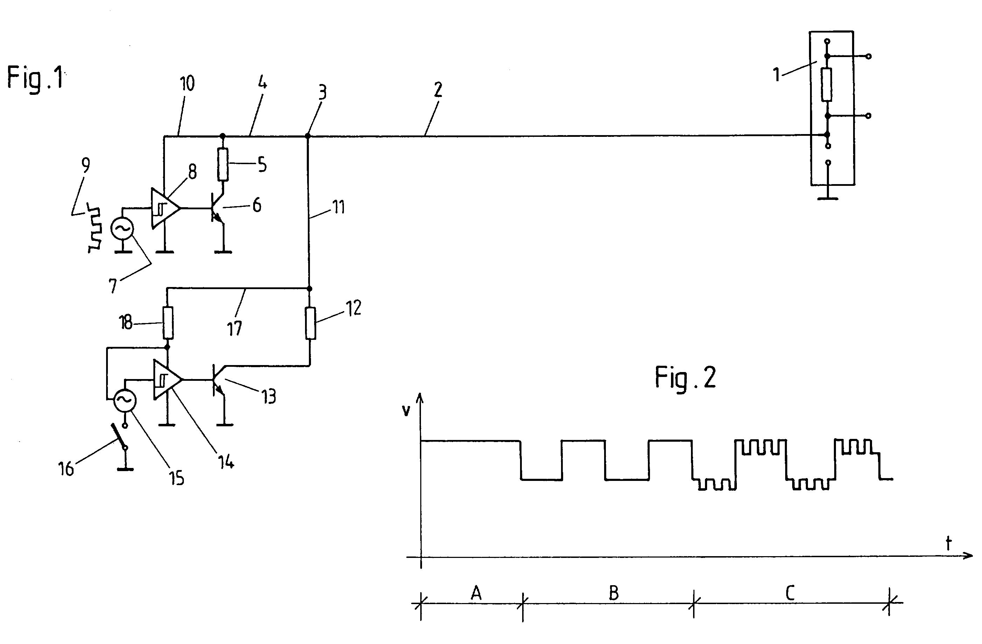

Steht das Fahrzeug still und weisen die Bremsbeläge noch eine hinreichende Stärke auf, so liegt an der Auswertelektronik eine konstante Gleichspannung an (Abschnitt A im Diagramm nach Fig. 2), auch wenn die Bremse gedrückt sein sollte. Bewegt sich das Fahrzeug und sind die Bremsbeläge intakt, so wird über den aktiven Hallsensor 7 und den Schmitt-Trigger 8 die Basis des Transistors 6 angesteuert mit der Folge, daß der vorerst konstanten Gleichspannung auf der Leitung 12 eine Impulsfolge vorgegebener Höhe überlagert wird (Abschnitt B im Diagramm nach Fig. 2), deren Frequenz jedoch abhängig ist von der Höhe der Drehzahl. Die Amplitude der Frequenzfolge ist unabhängig von der Drehzahl. Wird nun weiter angenommen, daß die Bremse betätigt wird und daß der Bremsbelag bereits ausreichend abgenutzt und verschlissen ist, so daß dabei der im Bremsbelag steckende Kontaktstift einen Masseschluß erzeugt, das binäre Schaltglied 16 also schließt, so steuert dadurch der eine konstante Frequenz von beispielsweise 66 kHz erzeugende Frequenzgenerator 15 über den Schmitt-Trigger 14 die Basis des Transistors 13 an mit der Folge, daß der Impulsfolge nach dem Abschnitt B im Diagramm nach Fig. 2 eine hinsichtlich Amplitude und Frequenz konstante Impulsfolge überlagert wird (Abschnitt C im Diagramm nach Fig. 2).

Dank der hier gewählten Schaltung fallen stets gleiche Impulsfolgen an, die in der Auswertelektronik 1 sicher und zuverlässig verarbeitet und verwertet werden können. Auch bei stillstehendem Motor bzw. stillstehendem Fahrzeug kann die Bremse bzw. der Bremsbelag geprüft werden. Da nur eine einadrige Verbindungsleitung bzw. einadrige Leitungszweige vorhanden sind, ist diese gegenüber äußeren Störeinflüssen (Radiosender; Lichtmaschinen im Kraftfahrzeug; fremde Fahrzeuge; Zündfunken u. dgl.) zuverlässig und sicher abzuschirmen.

Durch das Verhältnis der Widerstandsgrößen der in den Zweigen 4 und 11 liegenden Widerstände 5 und 12 werden trotz einheitlicher Versorgungsspannung hinreichend unterschiedliche Amplituden für die Signaifrequenzen erzielt, die in der Auswertelektronik 1 sicher und zuverlässig zu selektieren und detektieren sind. Auch erhebliche Streuungen in den Nennwerten der elektronischen Bauteile wirken sich nicht gravierend aus. Selbst wenn das binäre Schaltglied 16, das ja im gezeigten Ausführungsbeispiel extremen Verhältnissen ausgesetzt ist, ausfallen sollte, sei es schaltungstechnisch oder durch einen Kurzschluß oder durch eine Fehlfunktion, ist dadurch die Erzeugung und Übertragung der vom Drehzahlsensor kommenden Impulsfolge nicht beeinträchtigt, da die Widerstände 12 und 18 die eventuelle Störstelle gegenüber der Leitung 2 absichern.

Es sei der Vollständigkeit halber erwähnt, daß bei einem Fahrzeug alle Räder mit Einrichtungen der beschriebenen Art bestückt sind.

Ist die vorstehende Einrichtung im Zusammenhang mit einem Antiblockiersystem und einer Bremsbelagverschleißanzeige erörtert worden, so ist die Einrichtung auf diesen Anwendungsfall nicht eingeschränkt. Es ist möglich und liegt im Rahmen der Erfindung, das binäre Schaltglied 16 mit dem Frequenzgenerator 15, dem Schmitt-Trigger 14, dem Transistor 13 und den Vorschaltwiderständen 12 und 18 mehrfach vorzusehen und diese mehrfach vorhandenen, im wesentlichen gleich aufgebauten Zweige zueinander parallel zu schalten und dabei Frequenzgeneratoren unterschiedlicher Nennfrequenz einzusetzen. Mit solchen mehrfach vorgesehenen binären Schaltgliedern kann beispielsweise eine Getriebeautomatik eines Kraftfahrzeuges bestückt werden, wobei den einzelnen Schaltstufen des Getriebes unterschiedliche, jedoch jeweils konstante Frequenzen zugeordnet werden.

Ist vorstehend im Zusammenhang mit dem beispielsweise erörterten Ausführungsbeispiel dargelegt, daß das binäre Schaltglied 16 als Kontaktstift ausgebildet ist, das im Bremsbelag steckt und das bei entsprechendem Verschleiß des Bremsbelages einen Masseschluß erzeugt, so sei festgehalten, daß zur Bremsbelagverschleißkontrolle auch Kontaktschleifen im Bremsbelag vorgesehen sein können, die einen Masseschluß erzeugen, solange der Bremsbelag ausreichend stark ist. Ist der Bremsbelag verschlissen, so wird diese Kontaktschleife aufgetrennt und der Masseschluß unterbrochen. Auch für einen solchen Fall ist die vorstehend beschriebene Einrichtung einsetzbar. Es ist dann im Kreis des binären Schaltgliedes 16 ein Inverter vorzusehen.

Die vorstehend im einzelnen dargestellten und beschriebenen Schaltglieder sind in elektronischen Bausteinen zusammengefaßt und bilden integrierte Schaltkreise von äußerst kleinen Abmessungen, die in Gehäusen untergebracht werden, die im Nabenbereich eines Rades festgelegt werden, so daß zwischen diesen Baukomponenten im Nabenbereich des Rades und der Auswertelektronik im Fahrgastraum oder Motorraum nur eine einfache, gut abschirmbare, einadrige Leitung verlegt werden muß mit einfachen Steckverbindungen.

Wenn vorstehend von Schmitt-Trigger, Transistoren, Frequenzgeneratoren u. dgl. die Rede ist, so sind damit elektronische Bausteine bezeichnet und eingeschlossen, die bestimmte elektrische, für sie charakteristische Eigenschaften besitzen. Anders benannte elektronische Bausteine und Bauelemente dieser Art mit gleichen oder vergleichbaren Eigenschaften sind als äquivalente Lösung zu betrachten.

Im besprochenen und gezeigten Ausführungsbeispiel ist als Binärsensor ein binäres Schaltglied (Ein-Aus-Schalter) beschrieben. Anstelle eines solchen Binärsensors ist auch ein Analogsensor (beispielsweise Temperaturfühler) einsetzbar. Das vom Analogsensor erzeugte Analogsignal steuert dann über geeignete Schaltglieder die Basis des Transistors 13 in der Weise an, daß die zu überlagernde Impulsfolge zwar konstante Impulse, aber in Abhängigkeit des Analogsignales unterschiedliche Frequenzen aufweist.

### Legende zu den Hinweisziffern:

1 Auswertelektronik
2 Leitung
3 Anschlußpunkt
4 Zweig
5 Widerstand
6 Transistor
7 Hallsensor
8 Schmitt-Trigger
9 Impulsrad
10 Leitungszweig
11 Zweig
12 Widerstand
13 Transistor
14 Schmitt-Trigger
15 Frequenzgenerator
16 Binäres Schaltglied
17 Leitungszweig
18 Widerstand

## Patentansprüche

1. Einrichtung zum Überwachen von mindestens zwei Zustandsgrößen eines Kraftfahrzeuges, nämlich einer Drehzahl mit einem Impulsrad und einem Hallsensor (7) und der Stärke oder Stellung eines Funktionsteiles wie der Stärke des Bremsbelages oder der Stellung eines Getrieberades mit mindestens einem Binärsignale (Ein-Aus-Signal) liefernden Binärsensor (16) oder einem Analogsensor, und Hallsensor und Binärsensor bzw. Analogsensor parallel zueinander geschaltet sind und die Sensoren über eine gemeinsame Leitung (2) mit einer Auswertelektronik (1) verbunden sind, wobei über die gemeinsame Leitung (2) sowohl die Versorgungsspannung für die Sensoren (7, 16) wie auch die Signale der Sensoren übertragbar sind und der Hallsensor (7) mit einem in Reihe liegenden Schmitt-Trigger (8) liegt und dieser einseitig an Masse liegende Zweig anderseitig an der Basis eines Transistors (6) angeschlossen ist, dessen Kollektor über einen Widerstand (5) an der einadrigen, die Versorgungsspannung führenden Leitung (2) und dessen Emitter an der Masse angeschlossen sind, wobei der Binärsensor (16) bzw. Analogsensor in Reihe mit einem Frequenzgenerator (15) liegt und dieser einseitig an Masse liegende Zweig an der Basis eines weiteren Transistors (13) angeschlossen ist, dessen Kollektor über einen Widerstand (12) an der einadrigen, die Versorgungsspannung führenden Leitung (2) und dessen Emitter an Masse angeschlossen sind und wobei die den Transistoren (6, 13) vorgeschalteten Widerstände (5, 12) unterschiedliche Widerstandswerte aufweisen, wobei der dem Binärsensor (16) bzw. Analogsensor zugeordnete Widerstand (12) größer, beispielsweise dreimal größer ist als der dem Hallsensor (7) zugeordnete Widerstand (5) und wobei in der Leitung (17) zur Spannungsversorgung des Schmitt-Triggers (14), der dem Binärsensor (16) bzw. Analogsensor zugeordnet ist, ein dem Schmitt-Trigger (14) vorgeschalteter Widerstand (18) vorgesehen ist.

2. Einrichtung nach Anspruch 1, dadurch gekennzeichnet, daß zur Spannungsversorgung der Schmitt-Trigger (8, 14) diese an der die Versorgungsspannung und die Signale der Sensoren übertragenden Leitung (2) angeschlossen sind, wobei die der Spannungsversorgung der Schmitt-Trigger (8, 14) dienenden Leitungen (10, 17) an der die Auswertelektronik (1) und die Sensoren (7, 16) verbindenden Leitung (2), in Richtung des Flusses des Versorgungsstromes gesehen, vor den den Transistoren (6, 13) zugeordneten Widerständen (5, 12) an dieser Leitung angeschlossen sind.

3. Einrichtung nach einem der Ansprüche 1 oder 2, dadurch gekennzeichnet, daß der den Binärsensor (16) bzw. Analogsensor aufweisende Zweig mehrfach vorhanden ist, daß diese Zweige parallel zueinander geschaltet sind und daß die in diesen Zweigen liegenden Frequenzgeneratoren (15) unterschiedliche Nennfrequenzen aufweisen.

## Claims

1. A device for monitoring at least two variables of state of a motor vehicle, namely a speed by means of a pulse wheel and a Hall sensor (7) and the thickness or position of an operational part such as the thickness of the brake lining or the position of a gearbox wheel by means of at least one binary sensor (16) supplying binary signals (on-off signal) or an analogue sensor, and the Hall sensor and the binary sensor or analogue sensor are connected in parallel with one another and the sensors are connected to evaluation electronics (1) via a common line (2), both the supply voltage for the sensors (7, 16) and the signals of the sensors being conveyable via the common line (2), and the Hall sensor (7) being in series with a Schmitt trigger (8) and this branch which is earthed at one side being connected at the other side to the base of a transistor (6) whose collector is connected via a resistor (5) to the single-wire line (2) conveying the supply voltage and whose emitter is connected to earth, the binary sensor (16) or analogue sensor being in series with a frequency generator (15) and this branch, earthed at one side, being connected to the base of another transistor (13) whose collector is connected via a resistor (12) to the single-wire line (2) carrying the supply voltage and whose emitter is connected to earth, and the resistors (5, 12) which are connected at the supply side of the transistors (6, 13) having different resistance values, the resistor (12) associated with the binary sensor (16) or analogue sensor having a value greater, for example three times greater, than the resistor (5) associated with the Hall sensor (7), and a resistor (18) connected at the supply side of the Schmitt trigger (14) being provided in the line (17) for supplying voltage to the Schmitt trigger (14) associated with the binary sensor (16) or analogue sensor.

2. A device in accordance with Claim 1, characterised in that for voltage supply to the Schmitt triggers (8, 14) these are connected to the line (2) conveying the supply voltage and the signals of the sensors, viewed in the direction of flow of the supply current, connection of the lines (10, 17) serving to supply voltage to the Schmitt triggers (8, 14) to the line (2) connecting the evaluation electronics (1) and the sensors (7, 16) being upstream of the resistors (5, 12) associated with the transistors (6, 13).

3. A device in accordance with either one of Claims 1 or 2, characterised in that several branches with the binary sensor (16) or analogue sensor are present, in that these branches are connected in parallel with one another, and in that the frequency generators (15) located in these branches have different rated frequencies.

## Revendications

1. Dispositif de contrôle d'au moins deux grandeurs d'état d'un véhicule à moteur, c'est-à-dire d'un nombre de tours avec une roue à impulsion et un capteur de Hall (7) et de la solidité ou de la position d'une pièce fonctionnelle comme l'épaisseur d'une garniture de frein ou la position d'une roue de transmission avec au moins un capteur binaire (16) délivrant des signaux binaires (signal d'entrée et de sortie) ou un capteur analogique, et un capteur de Hall et un capteur binaire ou capteur analogique sont montés en parallèle l'un par rapport à l'autre et les capteurs sont reliés par une ligne commune (2) à une électronique d'exploitation (1), tandis que par la ligne commune (2) sont transmissibles aussi bien la tension d'alimentation des capteurs (7, 16) que les signaux des capteurs et le capteur de Hall (7) est disposé avec un déclenchement de Schmitt (8) disposé en série et celui-ci est raccordé d'un côté à une branche mise à la masse et de l'autre côté à la base d'un transistor (6), dont le collecteur est raccordé par une résistance (5) à la ligne (2) monoconductrice, amenant la tension d'alimentation et dont l'émetteur est relié à la masse, le capteur binaire (16) ou capteur analogique est disposé en série avec un générateur de fréquence (15) et celui-ci est raccordé d'un côté à la branche se trouvant à la masse à la base d'un deuxième transistor (13), dont le collecteur est relié par une résistance (12) à la ligne (2) monoconductrice amenant la tension d'alimentation et dont l'émetteur est relié à la masse, et les résistances (5, 12) intercalées en avant des transistors (6, 13) comportent des valeurs différentes, la résistance (12) associée au capteur binaire (16) ou capteur analogique étant plus grande, par exemple trois fois plus importante que la résistance (5) associée au capteur de Hall (7) et dans la conduite (17) pour l'alimentation en tension de déclencheur de Schmitt (14), associé au capteur binaire (16) ou capteur analogique, une résistance (18) étant prévue intercalée en avant du déclencheur de Schmitt (14).

2. Dispositif selon la revendication 1,
caractérisé en ce que
pour l'alimentation en tension des déclencheurs de Schmitt (8, 14) ceux-ci sont raccordés à la ligne (2) transmettant la tension d'alimentation et les signaux des capteurs, tandis que les lignes (10, 17) servant à l'alimentation en tension des déclencheurs de Schmitt (8, 14) sont raccordées à la ligne (2) reliant l'électronique d'évaluation (1) et les capteurs (7, 16), vus dans le sens du flux du courant d'alimentation, en avant des résistances (5, 12) associés aux transistors (6, 13) sur cette ligne.

3. Dispositif selon une des revendications 1 ou 2,
caractérisé en ce que
• la branche comprenant le capteur binaire (16) ou capteur analogique existe en plusieurs exemplaires,
• ces branches sont montées en parallèle l'une par rapport à l'autre, et
• les générateurs de fréquences (15) situés dans ces branches comportent des fréquences nominales différentes.
